# EUROPÄISCHE PATENTSCHRIFT

(11) **EP 4 637 951 B1**
(45) Veröffentlichungstag und Bekanntmachung des Hinweises auf die Patenterteilung: **16.09.2026**
(21) Anmeldenummer: 23786218.0
(22) Anmeldetag: 05.10.2023
(51) Int. Cl.: B01D 29/15, B01D 35/147, B01D 35/153

(54) **FILTERVORRICHTUNG**
FILTER APPARATUS
APPAREIL DE FILTRATION

(30) Priorität: 21.12.2022 DE 102022004844
(43) Veröffentlichungstag der Anmeldung: 29.10.2025
(73) Patentinhaber: HYDAC FluidCareCenter GmbH, 66280 Sulzbach/Saar (DE)
(72) Erfinder: LAUER, Viktor Josef, 66809 Nalbach (DE)
(74) Vertreter: Bartels und Partner, Patentanwälte
(86) Internationale Anmeldenummer: PCT/EP2023/077613
(87) Internationale Veröffentlichungsnummer: WO 2024/132247

(56) Entgegenhaltungen:
- EP-B1- 3 352 876
- DE-U- 1 724 626
- US-A1- 2009 229 231
- US-A1- 2020 330 906

## Beschreibung

Die Erfindung betrifft eine Filtervorrichtung mit den Merkmalen im Oberbegriff von Anspruch 1.

Durch EP 4 088 801 A1 ist eine Filtervorrichtung mit einem Filtergehäuse bekannt, das zwei Anschlussstellen, nämlich einen Zulauf für Unfiltrat und einen Ablauf für Filtrat aufweist sowie ein austauschbares Filterelement, wobei eine Ventileinrichtung vorgesehen ist, die in einer Öffnungsstellung einen Fluidfluss zwischen einer der Anschlussstellen und dem Filterelement ermöglicht und in einer Schließstellung diesen Fluidfluss unterbindet, und wobei die Ventileinrichtung mittels einer Ansteuereinrichtung zwischen der Öffnungsstellung und der Schließstellung bewegbar ist. Auf diese Weise lässt sich auch bei unter Druck stehenden Hydraulikleitungen das Einfließen von Hydraulikflüssigkeit in das Gehäuse während des Filterelementwechsels sicher unterbinden. Hierfür weist die Ventileinrichtung ein Zuflussventil auf, das im Fluidfluss zwischen dem Zulauf und einer Außenseite des Filterelementes angeordnet ist sowie ein weiteres Abflussventil, das im Fluidfluss zwischen einer Innenseite des Filterelements und dem Ablauf angeordnet ist. Dergestalt setzt die bekannte Lösung zur Unterbindung eines Fluidstroms bei einem Filterelementwechsel zwei voneinander unabhängige Ventile ein, die federbelastet in Richtung ihrer Schließstellung gehalten sind.

Durch DE 10 2014 000 490 B4 ist eine Filtervorrichtung bekannt, mit einem eine Hauptachse definierenden Filtergehäuse, in dem mindestens ein Filterelement auswechselbar aufnehmbar ist und das einen das jeweilige Filterelement umgebenden Gehäusetopf und einen daran abnehmbar anbringbaren Gehäusekopf aufweist, in dem zumindest eine für den Abstrom von Filtrat vorgesehene Fluidführung ausgebildet ist, und mit einer dieser Fluidführung zugehörigen Ventileinrichtung, die eine Ventilplatte aufweist, die in einer Schließstellung den Abstrom von Filtrat sperrt und in einer Freigabestellung ermöglicht, und mit einer Riegeleinrichtung, die ein Sperrglied aufweist, das in einer Riegelstellung die Ventilplatte der Ventileinrichtung in der Schließstellung verriegelt, wobei das Sperrglied aus der Riegelstellung in eine unwirksame Entriegelstellung mittels am betreffenden Filterelement vorgesehener Laschen bewegbar ist, das beim Gehäusetopf in der Funktionsstellung befindlichem Filterelement im Zuge des Anbringens des Gehäusekopfes am Gehäusetopf mechanisch auf das Sperrglied einwirkt, wobei das Sperrglied für seine Bewegung zwischen Riegelstellung und Entriegelstellung im Gehäusekopf entlang der Hauptachse axial verschiebbar gelagert und beim Anbringen des Gehäusekopfes durch Kontakt mit einzelnen Laschen am Filterelement in die Entriegelstellung verschiebbar ist.

Ferner wirkt ein Ringkörper des Sperrgliedes mit der Ventilplatte über eine Federanordnung zusammen, die eine vorgebbare Anzahl von Federfingern aufweist, die mit einem Ende am Aufnahmering in am Umfang der Durchströmöffnung verteilter Anordnung verankert sind und bei der Entriegelstellung des Sperrgliedes sich mit ihren freien Enden außerhalb des Umfangsbereiches der Ventilplatte erstrecken, wobei der Ringkörper des Sperrgliedes an seinem Innenumfang eine konische Steuerfläche aufweist, die bei der Bewegung des Sperrgliedes in die Riegelstellung an den Federfingern anläuft und deren freie Enden radial nach innen in eine den Rand der in Schließstellung befindlichen Ventilplatte übergreifende Stellung bringen.

Dergestalt wird für die Durchführung eines Filterelementwechsels die Filtervorrichtung außer Betrieb gesetzt und beim Wegfall des Betriebs-Fluiddruckes gelangt die die Fluidzufuhr sperrende Ventilplatte der Ventileinrichtung in die Schließstellung zurück. Da die Ventilplatte parallel zur Fluidströmungsrichtung wirkt, entfallen etwaige Querkräfte, was zu einer Verringerung von Reibungskräften und damit zu einer Verringerung der notwendigen Ventil-Betätigungskräfte führt. Letzteres führt wiederum zu einer verringerten Materialbelastung und erlaubt insoweit die Verwendung von kostengünstigen Materialien, wie beispielsweise Kunststoffmaterialien.

Die US 2020/0330906 A1 beschreibt eine Filtervorrichtung mit den Merkmalen im Oberbegriff von Anspruch 1 mit einem Filtergehäuse zumindest bestehend aus einem Gehäuseteil und einem weiteren Gehäuseteil, das ein Filterelement aufnimmt und das mit dem einen Gehäuseteil in wiederlösbarer Weise verbunden ist, und mit einer Ventileinrichtung, die mit zunehmender Trennung der beiden Gehäuseteile voneinander einen Fluidweg zwischen einer Anschlussstelle im Filtergehäuse für die Zufuhr von Unfiltrat von einer weiteren Anschlussstelle im Filtergehäuse für die Abfuhr von Filtrat zusehends trennt und bei einer Verbindung der beiden Gehäuseteile miteinander den dahingehenden Fluidweg zusehends wieder freigibt, wobei die Ventileinrichtung einen zumindest in einem der Gehäuseteile längsverfahrbaren Ventilschieber aufweist, der unter dem Einfluss der jeweiligen Einbausituation für das Filterelement von einer den Fluidweg freigebenden Öffnungsstellung in eine den Fluidweg sperrende Stellung und umgekehrt gelangt, und wobei der Ventilschieber einen Mittenkanal aufweist, der von einem Querkanal durchgriffen ist, der in der Öffnungsstellung des Ventilschiebers als Teil des Fluidweges eine Fluidverbindung zwischen dem Mittenkanal und zumindest einer der beiden Anschlussstellen im Filtergehäuse herstellt und in seiner sperrenden Stellung verschließt.

Weitere Filtervorrichtungen gehen aus der US 2009/0229231 A1, der EP 3 352 876 B1 und der DE 1 724 626 U hervor.

Ausgehend von diesem Stand der Technik liegt der Erfindung die Aufgabe zugrunde, eine demgegenüber verbesserte Filtervorrichtung zu schaffen, die mit wenig Bauteilen eine zuverlässige, automatische Absperrung von an der Filtervorrichtung angeschlossenen Fluidleitungen bei einem Filterelementwechsel ermöglicht.

Eine dahingehende Aufgabe löst eine Filtervorrichtung mit den Merkmalen des Patentanspruches 1 in seiner Gesamtheit.

Gemäß dem Kennzeichen von Anspruch 1 ist vorgesehen, dass der Ventilschieber außenumfangsseitig eine Kanalführung aufweist, die als Teil des Fluidweges in der Öffnungsstellung eine Fluidverbindung zwischen der anderen der beiden Anschlussstellen und einer Außenumfangsseite des Filterelementes herstellt und in der sperrenden Stellung verschließt.

Es ist ferner vorgesehen, dass die Ventileinrichtung einen zumindest in einem der Gehäuseteile längsverfahrbaren Ventilschieber aufweist, der unter dem Einfluss der jeweiligen Einbausituation für das Filterelement von einer den Fluidweg freigebenden Öffnungsstellung in eine den Fluidweg sperrende Stellung und umgekehrt gelangt. Durch den Einsatz eines Ventilschiebers anstelle von federbelasteten Rückschlagventilen mit Ventiltellern, wie im Stand der Technik aufgezeigt, ist eine Vorrichtungslösung geschaffen, mittels der beim Filterelementwechsel das lästige Nachlaufen von Fluid, wie Hydrauliköl, aus den Leitungsanschlüssen vermieden ist. Insoweit ist eine zuverlässige automatische Absperrung der angeschlossenen Leitungen bei einem Filterelementwechsel, bei dem ein verbrauchtes Element gegen ein Neuelement getauscht wird, erreicht. Insgesamt ist mit dem Einsatz eines Ventilschiebers eine kostengünstige filterintegrierte Lösung erreicht und ein Einbau zusätzlicher Absperrorgane, wie beispielsweise Absperrhähne, Rückschlagventile, Fittings etc., eingespart. Ferner sind permanente Druckverluste vermieden, wie sie sich ansonsten durch im Strom liegende Rückschlagventile oder zusätzliche Fittings im Stand der Technik zwangsläufig ergeben.

Da bei entferntem Filterelement der Ventilschieber in jedem Fall in seine den Fluidweg zwischen den Fluidanschlussstellen sperrende Stellung gelangt, ist ein ungewollter, einen Hydraulikkreislauf mit seinen angeschlossenen Komponenten schädigender Betrieb ohne Filterelement mit Sicherheit vermieden, so dass insoweit der schlagwortartigen Forderung "no element, no flow" Genüge getan ist. Demgemäß sind auch Fehlbedienungen und Fehlfunktionen ausgeschlossen.

Bei der erfindungsgemäßen Filtervorrichtung ist vorgesehen, dass der Ventilschieber einen Mittenkanal aufweist, der von einem Querkanal durchgriffen ist, der in der Öffnungsstellung des Ventilschiebers als Teil des Fluidweges eine Fluidverbindung zwischen dem Mittenkanal und einer der beiden Anschlussstellen im Filtergehäuse herstellt und in seiner sperrenden Stellung verschließt. Dabei ist ferner vorgesehen, dass der Ventilschieber außenumfangsseitig eine Kanalführung aufweist, die als Teil des Fluidweges in der Öffnungsstellung eine Fluidverbindung zwischen der anderen der beiden Anschlussstellen und einer Außenumfangsseite des Filterelementes herstellt und in der sperrenden Stellung verschließt. Dergestalt ist ein querkraftfreier Betrieb für den Ventilschieber zwischen seinen beiden Funktionsstellungen "geöffnet" oder "geschlossen" erreicht ebenso wie ein hemmnisfreier Betrieb. Durch die angesprochene kanalartige Fluidwegführung ist ein besonders schonender Filterbetrieb erreicht, bei dem das Filterelement, das sich innenumfangsseitig an einem fluiddurchlässigen Stützkörper, wie einem Stützrohr abstützt, von außen nach innen durchströmt ist, d. h., die Zufuhr des Unfiltratstroms erfolgt außenumfangsseitig am Filterelement und die Abfuhr des abgereinigten Fluids in Form des Filtrats auf der Innenumfangsseite desselben.

Bei einer besonders bevorzugten Ausführungsform ist ferner vorgesehen, dass der Ventilschieber an seiner dem Filterelement zugewandten Seite ein Kopplungselement, insbesondere in Form eines Außengewindes, aufweist, das mit einem weiteren Kopplungselement am Filterelement, insbesondere in Form eines Innengewindes, in wiederlösbarer Weise zusammenwirkt, insbesondere in wiederlösbarer Weise eine Schraubverbindung eingeht. Dergestalt lässt sich in kostengünstiger und platzsparender Weise die benötigte Kopplung zwischen Filterelement und Ventilschieber herstellen.

Für einen hemmnisfreien Betrieb ist es ferner von Vorteil, wenn der Ventilschieber mittels eines Energiespeichers, insbesondere in Form einer Druckfeder, in Richtung seiner Sperrstellung vorgespannt ist.

Für einen zentralen, materialschonenden Kräfteangriff am Ventilschieber ist es von Vorteil, wenn der Ventilschieber und das Filterelement konzentrisch zur Längsachse des Filtergehäuses der Filtervorrichtung angeordnet sind.

Bei einer besonders bevorzugten Ausführungsform der erfindungsgemäßen Filtervorrichtung ist vorgesehen, dass der Ventilschieber zusammen mit den Anschlussstellen und dem zugehörigen Teil des Fluidweges in einem Filterkopf als dem einen Gehäuseteil und das Filterelement in einem Filtertopf als dem weiteren Gehäuseteil aufgenommen ist, das mit dem einen Gehäuseteil in wiederlösbarer Weise verbindbar, insbesondere verschraubbar, ist. Dergestalt lässt sich die Fluidsteuereinrichtung mit der zugehörigen Verrohrung an einem Filterkopf festlegen, der regelmäßig stationär am Hydraulikkreis verbleibt, wohingegen das tauschbare Filterelement über einen separaten Filtertopf vom Filtergehäuse abkoppelbar, insbesondere abschraubbar, aufgenommen ist.

Vorzugsweise ist dabei vorgesehen, dass in einem zusammengesetzten Zustand, insbesondere miteinander verschraubtem Zustand, der beiden Gehäuseteile und bei eingesetztem Filterelement der Mittenkanal des Ventilschiebers in den Innenraum des hohlzylindrischen Filterelementes ausmündet, so dass Kavitation durch etwaiges Auftreten von Turbulenz im Rahmen der Fluidführung vermieden ist.

Bei einer weiteren bevorzugten Ausführungsform der erfindungsgemäßen Filtervorrichtung ist vorgesehen, dass eine Rutschkupplung innerhalb des weiteren Gehäuseteils vorhanden ist, die beim Aufschrauben des Filterelementes auf den Ventilschieber im Rahmen des Einschraubvorganges des weiteren Gehäuseteils auf das eine Gehäuseteil den Aufschraubvorgang für das Filterelement beendet und den Einschraubvorgang für das weitere Gehäuseteil weiter zulässt und dass im Rahmen eines Abschraubvorganges die Rutschkupplung als starre Kupplung wirkt und gleichermaßen den Abschraubvorgang für das weitere Gehäuseteil nebst dem Filterelement in entgegengesetzter Drehrichtung ermöglicht. Dies erhöht insgesamt die Montagesicherheit, indem sichergestellt ist, dass zuerst das Filterelement definiert am Ventilschieber festgelegt ist, bevor das weitere Gehäuseteil, insbesondere in Form des Gehäusetopfes, weiter am einen Gehäuseteil in Form des Filterkopfes festgelegt wird. In entgegengesetzter Drehrichtung wird dann die als starre Kupplung wirkende Rutschkupplung dazu verwendet, gleichermaßen den Filtertopf als auch das Filterelement vom Filterkopf bzw. vom Ventilschieber des Filterkopfes abzuschrauben. Die hierbei zum Einsatz kommenden Gewindeelemente können in ihrer Steigung und/oder in ihrer Windungsanzahl derart unterschiedlich sein, dass in jedem Fall sichergestellt ist, dass das Filterelement am Ventilschieber des Gehäusekopfes bereits festgelegt ist, bevor der Gehäusetopf vollständig in den Gehäusekopf eingeschraubt ist.

Bei einer weiteren bevorzugten Ausführungsform der erfindungsgemäßen Filtervorrichtung ist vorgesehen, dass in einen Teil des Fluidweges zwischen den beiden Anschlussstellen ein Bypassventil geschaltet ist, das in den Querkanal eingreift. Dergestalt kann bei einem sogenannten Verblocken des Filterelementes, bei dem es von der Partikelverunreinigung bereits weitgehend zugesetzt ist und keinen Fluidstrom mehr durchlässt, dieses zwecks Aufrechterhalten der Funktion derart umgangen werden, dass über das dann geöffnete Bypassventil der Unfiltratstrom direkt von der Unfiltratseite auf die Filtratseite der Filtervorrichtung gelangt, was aber regelmäßig für den Hydraulikkreis nebst seinen angeschlossenen Komponenten unschädlich ist, da bereits vorab eine Vielzahl von Abreinigungsvorgängen des Fluids mittels des insoweit noch nicht zugesetzten Filterelementes stattgefunden hat und das zu transportierende Fluid demgemäß sauber ist.

**Im** Folgenden wird die erfindungsgemäße Filtervorrichtung anhand eines Ausführungsbeispiels nach der Zeichnung näher erläutert. Dabei zeigen in prinzipieller und nicht maßstäblicher Darstellung die
- Fig. 1: in der Art eines Längsschnittes die Filtervorrichtung als Ganzes;
- Fig. 2: einen vergrößerten Bildausschnitt des in Fig. 1 gezeigten Kreises; und
- Fig. 3: eine in Blickrichtung des Pfeiles in Fig. 1 um 90 Grad gedrehte teilweise Ansicht der Filtervorrichtung.

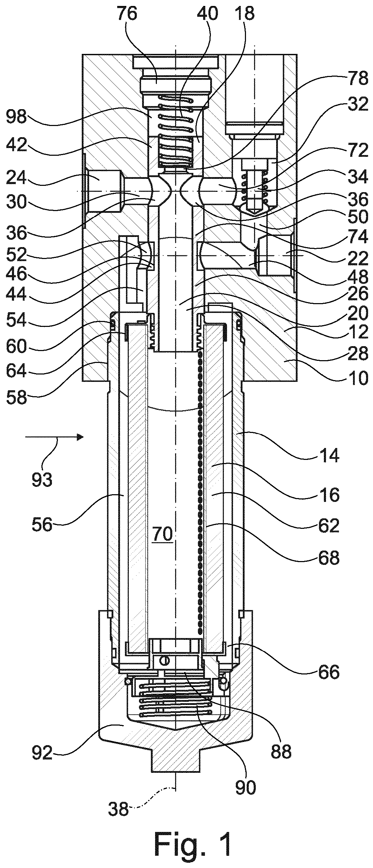

Die Fig. 1 zeigt in einer Art eines Längsschnitts die erfindungsgemäße Filtervorrichtung als Ganzes. Die Filtervorrichtung weist ein Filtergehäuse 10 auf mit einem ersten Gehäuseteil 12 und einem weiteren zweiten Gehäuseteil 14, das ein Filterelement 16 aufnimmt und das mit dem einen Gehäuseteil 12 in wiederlösbarer Weise verbunden ist. Ferner weist die Filtervorrichtung eine Ventileinrichtung 18 auf, die mit zunehmender Trennung der beiden Gehäuseteile 12, 14 voneinander einen Fluidweg 20 zwischen einer ersten Anschlussstelle 22 im Filtergehäuse 10 für die Zufuhr von Unfiltrat von einer weiteren zweiten Anschlussstelle 24 im Filtergehäuse 10 für die Abfuhr von Filtrat zusehends trennt und bei einer Verbindung der beiden Gehäuseteile 12, 14 miteinander den dahingehenden Fluidweg 20 zusehends wieder freigibt, was im Folgenden noch näher erläutert werden wird. Dabei weist die Ventileinrichtung 18 einen, in dem einen ersten Gehäuseteil 12 längsverfahrbaren Ventilschieber 26 auf, der unter dem Einfluss der jeweiligen Einbausituation für das Filterelement 16 von einer den Fluidweg 20 freigebenden Öffnungsstellung in eine diesen Fluidweg 20 sperrende Stellung und umgekehrt gelangt.

Wie die Fig. 1 weiter zeigt, weist der Ventilschieber 26, in der Art eines Hohlzylinders ausgebildet, einen im Querschnitt gesehen kreisrunden Mittenkanal 28 auf, der in Blickrichtung auf die Fig. 1 gesehen, in seinem oberen Endbereich von einem Querkanal 30 mit einem demgegenüber kleineren freien Querschnitt durchgriffen ist. Hierfür mündet der Querkanal 30 an seinem einen freien Ende in die zweite Anschlussstelle 24 und mit seinem anderen freien Ende in einen Aufnahmeraum 32 aus, der der Aufnahme eines Bypassventiles 34 dient, das in das erste Gehäuseteil 12 von oben her eingesetzt, insbesondere von oben her eingeschraubt ist. Für die Querung des Mittenkanals 28 durch den Querkanal 30 weist der Ventilschieber 26 in seiner in der Fig. 1 gezeigten, den Fluidweg 20 freigebenden Öffnungsstellung zwei Bohrungen 36 auf, die in gleicher Höhe im Ventilschieber 26 angeordnet, diametral zur Längsachse 38 von zweitem Gehäuseteil 14 nebst Filterelement 16 einander gegenüberliegen. Der freie Durchmesser der beiden Bohrungen 36 entspricht dabei im Wesentlichen dem freien Durchmesser des Querkanals 30. Nimmt der Ventilschieber 26 seine den Fluidweg 20 sperrende Stellung ein, verfährt er in Blickrichtung auf die Fig. 1 gesehen unter Zuhilfenahme eines Energiespeichers in Form einer Druckfeder 40 nach unten, was nur möglich ist, wenn zumindest das Filterelement 16 aus der Filtervorrichtung entfernt ist. Bei der dahingehenden Abwärtsbewegung des Ventilschiebers 26 verschließt er mit einem ringförmigen Wandbereich 42, der oberhalb der beiden Bohrungen 36 angeordnet ist, den Querkanal 30, und zwar entlang seiner beiden Öffnungen, die dem Ventilschieber 26 gegenüberliegen und die durch die beiden Bohrungen 36 gebildet sind.

Des Weiteren weist der Ventilschieber 26 außenumfangsseitig eine Kanalführung 44 auf, die eine im Querschnitt gesehen rechteckförmige Ringnut ausbildet, die den Ventilschieber 26 umfasst, wobei der Nutgrund der Kanalführung 44 aus einem verbleibenden hohlzylindrischen Wandteil 46 des Ventilschiebers 26 gebildet ist. In der in Fig. 1 gezeigten geöffneten Stellung des Ventilschiebers 26 mündet die Kanalführung 44 in einen horizontal verlaufenden Fluidkanal 48 ein, der an seinem anderen freien Ende in die im Durchmesser verbreitete erste Anschlussstelle 22 ausmündet. Im Übergangsbereich zwischen Fluidanschlussstelle 22 und Fluidkanal 48 mündet ein vertikal verlaufender Stichkanal 50 ein, der an seinem oberen freien Ende von dem Bypassventil 34 verschlossen ist.

Auf der anderen gegenüberliegenden Seite zum Fluidkanal 48 mündet ein Kanalabschnitt 52 im einen Gehäuseteil 12 in die umlaufende Kanalführung 44 ein, wobei der Kanalabschnitt 52 an seinem anderen freien Ende wiederum in einen vertikal verlaufenden Übergangskanal 54 ausmündet, der an seinem unteren freien Ende in einen Unfiltratraum 56 im zweiten Gehäuseteil 14 ausmündet, der nach außen hin von der Innenwand des zweiten Gehäuseteiles 14 begrenzt ist und auf seiner Innenseite von einer Außenumfangsfläche des Filterelementes 16. Insoweit ist das zweite weitere Gehäuseteil 14 an seinem oberen Ende offen ausgebildet, so dass insoweit eine Art Filtertopf geschaffen ist, der mit einem Außengewinde entlang einer Gewindestrecke 58 mit dem Innengewinde des ersten Gehäuseteiles 12 verschraubt ist, das insoweit eine Art Filterkopf ausbildet. Insbesondere ist der dahingehende Filterkopf über seine beiden Anschlussstellen 22, 24 mit einer nicht näher dargestellten Verrohrung eines Hydraulikkreises fluidführend verbunden. Dahingehend bildet der Gehäusekopf einen stationären Teil der Filtervorrichtung aus und der Filtertopf 14 mit dem Filterelement 16 kann als mobiler Teil der Filtervorrichtung von dem Filterkopf abgeschraubt werden, so dass insoweit eine Koppelverbindung zwischen dem einen Gehäuseteil 12 und dem weiteren Gehäuseteil 14 geschaffen ist. Um die Gewindeverbindung über die Gewindestrecke 58 druckdicht abzusichern, kann am freien Ende des Filtertopfes 14 eine Dichteinrichtung 60 in Form mindestens eines O-Dichtringes angeordnet sein.

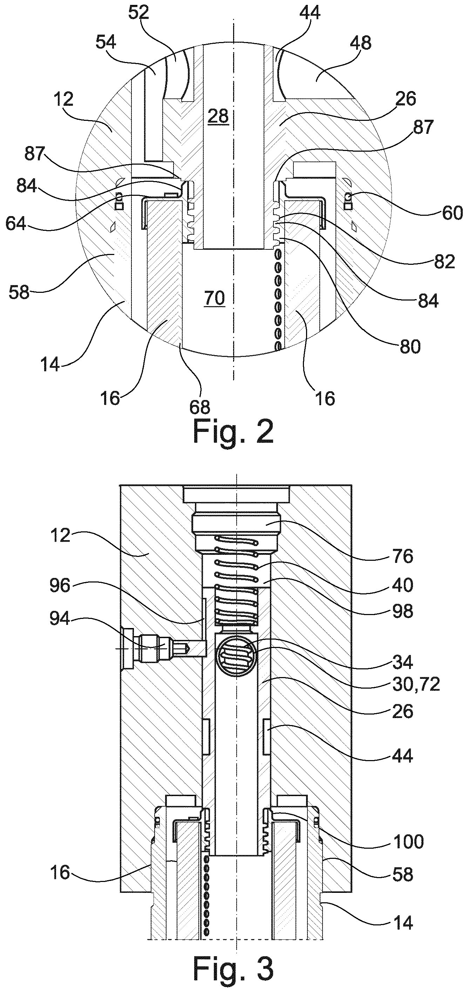

Das Filterelement 16 besteht, wie üblich, aus einem plissierten Filtermedium 62 aus mehreren Elementlagen, das sich zwischen einer oberen Endkappe 64 und einer unteren Endkappe 66 erstreckt, wobei der einfacheren Darstellung wegen in der Fig. 3 die obere Endkappe 64 nicht gezeichnet ist. Das plissierte Filtermedium 62 wird ausgehend von dem Unfiltratraum 56 von außen nach innen durchströmt und stützt sich dabei auf seiner Innenumfangsseite in üblicher Weise an einem fluiddurchlässigen Stützkörper in Form eines Stützrohres 68 ab und der einfacheren Darstellung wegen ist nur ein Teil der kreisrunden Fluiddurchlässe gezeigt, die sich in Längsreihen unter vorgebbarem Abstand zueinander angeordnet zwischen der oberen und der unteren Endkappe 64, 66 erstrecken. Das Filterelement 16 umfasst insoweit in hohlzylindrischer Weise einen Filtratraum 70, der in der gezeigten Öffnungsstellung des Ventilschiebers 26 permanent fluidführend an dem Mittenkanal 28 angeschlossen ist. Nach unten hin ist der dahingehende Filtratraum 70 aber über die geschlossen ausgebildete untere Endkappe 66 fluiddicht abgeschlossen.

Der angesprochene Fluidweg 20 in dem ersten Gehäuseteil 12 besteht in Fluiddurchströmungsrichtung gesehen, also aus der ersten Anschlussstelle 22, dem horizontal verlaufenden Fluidkanal 48, der ringförmig verlaufenden Kanalführung 44 im Ventilschieber 26, dem in Verlängerung zum Kanal 48 auf der gegenüberliegenden Seite verlaufenden Kanalabschnitt 52, dem vertikal verlaufenden Übergangskanal 54, dem Unfiltratraum 56, den Fluiddurchgangsstellen im Filtermedium 62, dem Filtratraum 70, dem vertikalen Mittenkanal 28, aus mindestens einer der Bohrungen 36, dem Querkanal 30 und der zweiten weiteren Fluidanschlussstelle 24. Die weitere Bohrung 36 im Ventilschieber 26 bildet mit dem insoweit an dieser Stelle verlängerten Querkanal 30 zusammen mit dem Aufnahmeraum 32 für das Bypassventil 34 und dem weiteren, vertikal verlaufenden Stichkanal 50 einen Bypass- oder Umgehungsweg 72 aus, der in Funktion tritt, wenn bei verblocktem Filtermedium 62 der Fluidweg 20 in diesem Bereich gesperrt ist und unter dem zunehmenden Eingangsdruck an der ersten Anschlussstelle 22, der Ventilkörper des federbelasteten Rückschlagventils als dem Bypassventil 34 öffnet und die direkte Fluidverbindung zwischen der ersten Anschlussstelle 22 und der zweiten Anschlussstelle 24 unter Umgehung des Filterelementes 16 freigibt. Dabei strömt Fluid von der ersten Anschlussstelle 22 und dem stichartig eintretenden Kanal 50 bei geöffnetem Bypassventil 34 über den diesbezüglichen Aufnahmeraum 32 in den Querkanal 30 ein und insoweit über die beiden Bohrungen 36 und den Mittenkanal 28 auf die Ausgangsseite, sprich zu der zweiten Anschlussstelle 24.

Voraussetzung für die dahingehenden Fluidwege 20, 72 ist, dass der Ventilschieber 26 seine in der Fig. 1 gezeigte Öffnungsstellung einnimmt. Nimmt bei entferntem Filterelement 16 der rohrförmige Ventilschieber 26 jedoch seine geschlossene Position ein, gelangt die Kanalführung 44 außer Eingriff mit den benachbarten Fluidkanälen 48, 52, 54 des Fluidweges 20 und sowohl der horizontal verlaufende Fluidkanal 48 als auch der in gleicher Höhe ebenfalls horizontal verlaufende Kanalabschnitt 52 werden von dem darüberliegenden Wandabschnitt 74 des Ventilschiebers 26 übergriffen und derart abgesperrt, so dass auch insoweit der beschriebene Fluidweg 20 gänzlich unterbunden ist. Die angesprochene Druckfeder 40 zur Ansteuerung des Ventilschiebers 26 stützt sich mit ihrem einen freien Ende an einem insoweit in das Gehäuseteil 12 einschraubbaren Gehäusestopfen 76 ab und mit ihrem anderen freien Ende an einem Verschlussteil 78, das insoweit oberhalb der beiden Bohrungen 36 den Mittenkanal 28 nach oben hin sperrt.

Wie insbesondere die Fig. 2 zeigt, ist das Filterelement 16 über ein Innengewinde 80 mit einem Außengewinde 82 am unteren Ende des Ventilschiebers 26 verschraubbar geführt, wobei derart in koaxialer Anordnung zu der einen ersten Gewindestrecke 58 eine weitere zweite Gewindestrecke 84 zwischen Ventilschieber 26 und Filterelement 16 gebildet ist. Insbesondere ist die axiale Baulänge der weiteren Gewindestrecke 84 kürzer als die Baulänge der einen Gewindestrecke 58 zwischen den beiden Gehäuseteilen 12, 14. Das Innengewinde 80 der oberen Endkappe 64 verläuft über eine vorgebbare Wegstrecke entlang der Innenumfangsseite des Stützrohres 68 in seinem oberen Endbereich. In Verlängerung dieses Innengewindes 80 steht in Blickrichtung auf die Fig. 2 gesehen nach oben hin ein Rand 86 vor, der als Anschlagrand dazu dient, im festgelegten Zustand des Filterelementes 16 in Anlage mit der Unterseite des Ventilschiebers 26 in seiner in der Fig. 1 gezeigten Öffnungsstellung zu gelangen, wozu das Außengewinde 84 von seinem Durchmesser her gegenüber der unteren Anschlagfläche 87 des Ventilschiebers 26 entsprechend reduziert ist.

Des Weiteren ist am unteren Ende des Filterelementes 16 eine Rutschkupplung 88 vorgesehen, die mit einer weiteren Druckfeder 90 zusammenwirkt. Die Rutschkupplung 88 ist dabei Bestandteil des weiteren Gehäuseteiles 14, wobei die Rutschkupplung 88 beim Aufschrauben des Filterelementes 16 auf den Ventilschieber 26, im Rahmen des Einschraubvorganges des weiteren Gehäuseteiles 14 auf das eine Gehäuseteil 12 den Aufschraubvorgang für das Filterelement 16 beendet, indem das Filterelement 16 eben über den Rand 86 in Anlage mit der Anschlagfläche 87 des Ventilschiebers 26 kommt, der im Übrigen aus seiner den Fluidweg 20 sperrenden, unteren Ventil- oder Schieberstellung entgegen der Wirkung der Druckfeder 40 in seine Öffnungsstellung nach den Fig. 1 bis 3 wieder nach oben gelangt. Nachdem über Innengewinde 80 und Außengewinde 82 die weitere Gewindestrecke 84 vollständig hergestellt ist, ist es dank der Rutschkupplung 88 möglich, den Einschraubvorgang für das weitere Gehäuseteil 14 in das Gehäuseteil 12 weiter zuzulassen, bis auch dahingehend vollständig die Gewindestrecke 58 zwischen den beiden Gehäuseteilen 12, 14 hergestellt ist, indem eben das weitere Gehäuseteil 14 gemäß der Darstellung nach den Fig. 1 bis 3 seine vollständig eingeschraubte Position einnimmt.

Im umgekehrten Fall, also in entgegengesetzter Drehrichtung des weiteren Gehäuseteiles 14, wirkt nunmehr die Rutschkupplung 88 in einer Baueinheit zusammengefasst als starre Kupplung und erlaubt gleichermaßen den Abschraubvorgang für das weitere Gehäuseteil 14 nebst dem Filterelement 16 von dem einen Gehäuseteil 12 bzw. von dem Außengewinde 82 des Ventilschiebers 26. Die dahingehende technische Lösung einer Rutschkupplung 88, die sich in entgegengesetzter Drehrichtung in eine starre Kupplung umwandeln lässt und auch wieder zurück, ist in allen Details in EP 3 352 876 B1 beschrieben, so dass an dieser Stelle hierauf nicht mehr näher eingegangen wird.

In jedem Fall ist das Außengewinde 82 gegenüber dem sonstigen Außendurchmesser des Ventilschiebers 26 im Durchmesser derart reduziert, dass sich das freie Ende des ringförmigen Randes 86 der oberen Elementkappe 64 auf der freien Stirnseite des Ventilschiebers in der Einbausituation abstützen kann. Dergestalt lässt sich im Rahmen des Aufschraubvorganges des Filterelements 16 auf den Ventilschieber 26 dieser entgegen der Wirkung der Druckfeder 40 nach oben verschieben. Hierfür entspricht unter Bildung des Anschlages der Außendurchmesser des Außenumfanges des Ventilschiebers 26 im Wesentlichen dem Außendurchmesser des Randes 86 der Elementkappe 64. Ansonsten ist der Außendurchmesser des Ventilschiebers 26 im Wesentlichen konstant gehalten, ebenso sein Innendurchmesser, welcher den Mittenkanal 28 ausbildet. Um eine dahingehende, auch als starre Kupplung wirkende Rutschkupplung 88 in das Filtergehäuse 10 integrieren zu können, weist der zylindrische Gehäusemantel des weiteren Gehäuseteiles 14 an seiner Unterseite eine Topfaufnahme 92 auf, die mit der Unterseite des weiteren Gehäuseteiles 14 verschraubt ist, und zwar derart, dass über Drehbewegungen an der Topfaufnahme 92 das Gehäuseteil 14 in beiden Dreh- oder Schraubrichtungen mitgenommen werden kann. Insbesondere die Darstellung nach der Fig. 1 verdeutlicht, dass wenn kein Filterelement 16 im weiteren Gehäuseteil 14 eingesetzt ist, der Ventilschieber 26 auch nicht in seine gezeigte Öffnungs- oder Funktionsstellung kommen kann. Vielmehr wird unter dem Einfluss der Druckfeder 40 der Ventilschieber 26 dann nach unten in das Innere des Gehäuseteils 14 geschoben und verschließt dabei die angesprochenen Kanalabschnitte des Fluidweges 20 und insoweit ist auch der Bypass- oder Umgehungsweg 72 verschlossen. Erst bei eingesetztem Filterelement 16 nimmt der Ventilschieber 26 seine in den Figuren gezeigte Position ein und der Fluidweg 20 ist für die anstehende Filtration mit dem Filterelement 16 freigegeben und das Bypassventil 34 kann im Bedarfsfall in Funktion treten.

Die Darstellung nach der Fig. 3 entlang des Pfeiles 93 in Fig. 1 zeigt den Eingriff einer Sicherungsschraube 94 von der Seite her in den Ventilschieber 26, die innerhalb des ersten Gehäuseteiles 12 festgelegt ist. Das freie Ende der Sicherungsschraube 94 greift dabei in einen abschnittsweise eingebrachten Längskanal 96 vorgebbarer Länge am Außenumfang des Ventilschiebers 26 ein. Über die dahingehende Sicherungsschraube 94 nebst Längskanal 96 ist der Ventilschieber 26 in seiner zugehörigen Gehäuseöffnung 98 im Gehäuseteil 12 in längsverfahrbarer Weise gesichert, d. h., der Ventilschieber 26 wird auch in seiner zuunterst angeordneten Sperrstellung mittels der Sicherungsschraube 94 in der Gehäuseaufnahme 98 gehalten. Hierbei schlägt die Sicherungsschraube 94 am oberen Ende des Längskanals 98 an, ansonsten in der Öffnungsstellung am unteren Ende wie in Fig. 3 dargestellt. In der Fig. 3 ist eine Ringnut 100 zu erkennen, die den Übergang vom Außenumfang des Ventilschiebers 26 zu seinem Außengewinde 82 bildet. Ferner wird deutlich, dass das obere Ende des Filtermediums 62 im Wesentlichen bündig mit einer fiktiven Verlängerung des oberen Auslaufes des Außengewindes 82 abschließt. Ansonsten schließt in der geöffneten Stellung des Ventilschiebers 26 seine Unterseite im Übergangsbereich zur Ringnut 100 mit dem unteren Ende der Gehäuseaufnahme 98 des Gehäuseteiles 12 ab.

Mit der erfindungsgemäßen Filtervorrichtungslösung lassen sich Ölverluste vermeiden, so dass bei einem etwaigen Elementwechsel des Filterelementes 16 sich nicht zwingend die Notwendigkeit eines Nachfüllens ergibt. Neben der Vermeidung des Eintrags von Ölverunreinigungen auf die Reinseite der Filtervorrichtung hat es sich gezeigt, dass beim Elementwechsel auch ein ungewollter Lufteintrag vermeidbar ist. Durch die Anbindungslösung über diverse Gewindestrecken 58 und insbesondere 84 ist auch ein Nachbauschutz realisierbar, so dass insbesondere vermieden ist, dass Filterelemente 16 mit geringer Qualität eingewechselt werden können. Auch ist beim Filterelementwechsel das lästige Nachlaufen von Öl aus den Leitungsanschlüssen 22, 24 vermieden, wozu der zentral im Filterkopf 12 angeordnete Ventilschieber 26 gleichermaßen dient, der bei Entfernung des Filtertopfes 14 schwerkraftunterstützt selbständig schließt. Dies wird zwangsläufig durch die Federkraft der Druckfeder 40 mit unterstützt. Das Absenken des Ventilschiebers 26 erfolgt also schon beim Herausschrauben des Filtertopfes 14 aus dem Filterkopf 12. Die Verbindung des längsverfahrbaren Ventilschiebers 26 mit seiner Ansteuerung über eine an sich bekannte Rutschkupplung 88 hat so keine Entsprechung im Stand der Technik.

## Patentansprüche

1. Filtervorrichtung mit einem Filtergehäuse (10) zumindest bestehend aus einem Gehäuseteil (12) und einem weiteren Gehäuseteil (14), das ein Filterelement (16) aufnimmt und das mit dem einen Gehäuseteil (12) in wiederlösbarer Weise verbunden ist, und mit einer Ventileinrichtung (18), die mit zunehmender Trennung der beiden Gehäuseteile (12, 14) voneinander einen Fluidweg (20) zwischen einer Anschlussstelle (22) im Filtergehäuse für die Zufuhr von Unfiltrat von einer weiteren Anschlussstelle (24) im Filtergehäuse (10) für die Abfuhr von Filtrat zusehends trennt und bei einer Verbindung der beiden Gehäuseteile (12, 14) miteinander den dahingehenden Fluidweg (20) zusehends wieder freigibt, wobei die Ventileinrichtung (18) einen zumindest in einem der Gehäuseteile (12) längsverfahrbaren Ventilschieber (26) aufweist, der unter dem Einfluss der jeweiligen Einbausituation für das Filterelement (16) von einer den Fluidweg (20) freigebenden Öffnungsstellung in eine den Fluidweg (20) sperrende Stellung und umgekehrt gelangt, und wobei der Ventilschieber (26) einen Mittenkanal (28) aufweist, der von einem Querkanal (30) durchgriffen ist, der in der Öffnungsstellung des Ventilschiebers (26) als Teil des Fluidweges (20) eine Fluidverbindung zwischen dem Mittenkanal (28) und zumindest einer der beiden Anschlussstellen (24) im Filtergehäuse (10) herstellt und in seiner sperrenden Stellung verschließt, **dadurch gekennzeichnet, dass** der Ventilschieber (26) außenumfangsseitig eine Kanalführung (44) aufweist, die als Teil des Fluidweges (20) in der Öffnungsstellung eine Fluidverbindung zwischen der anderen (24) der beiden Anschlussstellen (22, 24) und einer Außenumfangsseite des Filterelementes (16) herstellt und in der sperrenden Stellung verschließt.

2. Filtervorrichtung nach Anspruch 1, **dadurch gekennzeichnet, dass** der Ventilschieber (26) an seiner dem Filterelement (16) zugewandten Seite ein Kopplungselement, insbesondere in Form eines Außengewindes (82), aufweist, das mit einem weiteren Kopplungselement am Filterelement, insbesondere in Form eines Innengewindes (80), in wiederlösbarer Weise zusammenwirkt, insbesondere in wiederlösbarer Weise eine Schraubverbindung eingeht.

3. Filtervorrichtung nach Anspruch 1 oder 2, **dadurch gekennzeichnet, dass** der Ventilschieber (26) mittels eines Energiespeichers, insbesondere in Form einer Druckfeder (40), in Richtung seiner Sperrstellung vorgespannt ist.

4. Filtervorrichtung nach einem der vorstehenden Ansprüche, **dadurch gekennzeichnet, dass** der Ventilschieber (26) und das Filterelement (16) konzentrisch zur Längsachse (38) des Filtergehäuses (10) angeordnet sind.

5. Filtervorrichtung nach einem der vorstehenden Ansprüche, **dadurch gekennzeichnet, dass** der Ventilschieber (26) zusammen mit den Anschlussstellen (22, 24) und dem zugehörigen Teil des Fluidweges (20) in einem Filterkopf als dem einen Gehäuseteil (12) und das Filterelement (16) in einem Filtertopf als dem weiteren Gehäuseteil (14) aufgenommen ist, das mit dem einen Gehäuseteil (12) in wiederlösbarer Weise verbindbar, insbesondere verschraubbar, ist.

6. Filtervorrichtung nach Anspruch 5, **dadurch gekennzeichnet, dass** im zusammengesetzten Zustand der beiden Gehäuseteile (12, 14) und bei eingesetztem Filterelement (16), der Mittenkanal (28) des Ventilschiebers (26) in den Innenraum (70) des hohlzylindrischen Filterelementes (16) ausmündet.

7. Filtervorrichtung nach Anspruch 5 oder 6, **dadurch gekennzeichnet, dass** eine Rutschkupplung (88) innerhalb des weiteren Gehäuseteils (14) vorhanden ist, die beim Aufschrauben des Filterelementes (16) auf den Ventilschieber (26) im Rahmen des Einschraubvorganges des weiteren Gehäuseteils (14) auf das eine Gehäuseteil (12) den Aufschraubvorgang für das Filterelement (16) beendet und den Einschraubvorgang für das weitere Gehäuseteil (14) weiter zulässt und dass im Rahmen eines Abschraubvorganges die Rutschkupplung (88) als starre Kupplung wirkt und gleichermaßen den Abschraubvorgang für das weitere Gehäuseteil (14) nebst dem Filterelement (16) in entgegengesetzter Drehrichtung ermöglicht.

8. Filtervorrichtung nach einem der vorstehenden Ansprüche, **dadurch gekennzeichnet, dass** in einen Teil des Fluidweges (20) zwischen den beiden Anschlussstellen (22, 24) ein Bypassventil (34) geschaltet ist, das in den Querkanal (30) zumindest teilweise eingreift.

## Claims

1. Filter apparatus having a filter housing
(10) at least consisting of first housing part (12) and a further housing part (14), which accommodates a filter element (16) and is releasably connected to the first housing part (12), and having a valve device (18), which, with increasing separation of the two housing parts (12, 14) from each other, visibly cuts off a fluid path (20) between one connection point (22) in the filter housing for the supply of unfiltered medium from a further connection point (24) in the filter housing (10) for the discharge of filtrate and, in the event of a connection of the two housing parts (12, 14) to each other, visibly releases the aforementioned fluid path (20) again, wherein the valve device (18) has a valve spool (26), which can be displaced longitudinally at least in one of the housing parts (12) and which moves, under the influence of the respective installation situation for the filter element (16), from an open position releasing the fluid path (20) into a position blocking the fluid path (20) and vice versa, and
wherein the valve spool (26)
has a central channel (28) through which a transverse channel (30) passes, which, in the open position of the valve spool (26), as part of the fluid path (20), establishes a fluid connection between the central channel (28) and at least one of the two connection points (24) in the filter housing (10) and closes it in its blocking position,
**characterised**
**in that** the valve spool (26)
has a channel guide (44) on the outer circumference, which, as part of the fluid path (20), establishes a fluid connection between the other (24) of the two connection points (22, 24) and an outer circumference of the filter element (16) in the open position and closes it in the blocking position.

2. Filter apparatus according to claim 1, **characterised in that** the valve spool (26) has, on its side directed towards the filter element (16), a coupling element, in particular in the form of an external thread (82), which cooperates in a releasable manner with a further coupling element on the filter element, in particular in the form of an internal thread (80), in particular enters into a screw connection in a releasable manner.

3. Filter apparatus according to either claim 1 or claim 2, **characterised in that** the valve spool (26) is pre-tensioned in the direction of its blocking position by means of an energy accumulator, in particular in the form of a compression spring (40).

4. Filter apparatus according to any of the preceding claims, **characterised in that** the valve spool (26) and the filter element (16) are arranged concentrically in relation to the longitudinal axis (38) of the filter housing (10).

5. Filter apparatus according to any of the preceding claims, **characterised in that** the valve spool (26) together with the connection points (22, 24) and the associated part of the fluid path (20) is accommodated in a filter head as the first housing part (12) and the filter element (16) in a filter bowl as the further housing part (14), which can be connected, in particular screwed, to the first housing part (12) in a releasable manner.

6. Filter apparatus according to claim 5, **characterised in that**, in the assembled state of the two housing parts (12, 14) and with the filter element (16) inserted, the central channel (28) of the valve spool (26) opens out into the interior (70) of the hollow cylindrical filter element (16).

7. Filter apparatus according to either claim 5 or claim 6, **characterised in that** a friction coupling (88) is present within the further housing part (14), which friction coupling, when the filter element (16) is screwed onto the valve spool (26) as part of the process for screwing the further housing part (14) onto the first housing part (12), terminates the process for screwing on the filter element (16) and allows the process for screwing in the further housing part (14) to continue, and **in that**, as part of an unscrewing process, the friction coupling (88) acts as a rigid coupling and likewise enables the process for unscrewing the further housing part (14) together with the filter element (16) in the opposite direction of rotation.

8. Filter apparatus according to any of the preceding claims, **characterised in that** a bypass valve (34), which engages at least partially in the transverse channel (30), is connected in a part of the fluid path (20) between the two connection points (22, 24).

## Revendications

1. Appareil de filtration comprenant un boîtier (10) de filtre constitué au moins d'une partie (12) de boîtier et d'une autre partie (14) de boîtier, qui reçoit un élément (16) de filtre et qui est assemblée d'une manière pouvant être redésassemblée à la une partie (12) de boîtier, et comprenant un dispositif (18) de soupape, qui, au fur à mesure qu'augmente la séparation des deux parties (12, 14) du boîtier l'une de l'autre, sépare à vue d'œil un chemin (20) pour du fluide, entre un point (22) de raccordement dans le boîtier de filtre pour l'arrivée de non filtrat d'un autre point (24) de raccordement dans le boîtier (10) de filtre, pour l'évacuation de filtrat et, lors d'un assemblage des deux parties (12, 14) du boîtier l'une à l'autre, redégage à vue d'œil le chemin (20) pour du fluide, dans lequel le dispositif (18) de soupape a un tiroir (26) de soupape, qui peut être déplacé longitudinalement au moins dans l'une des parties (12) du boîtier et qui, sous l'influence de la situation respective de montage de l'élément (16) de filtre, passe d'une position d'ouverture dégageant le chemin (20) pour du fluide à une position fermant le chemin (20) pour du fluide et inversement, et
dans lequel le tiroir (26) de soupape a un conduit (28) médian, qui est traversé par un conduit (30) transversal, qui produit, dans la position d'ouverture du tiroir (26) de soupape, comme partie du chemin (20) pour du fluide, une communication fluidique entre le conduit (28) médian et au moins l'un des deux points (24) de raccordement dans le boîtier (10) de filtre et la ferme dans sa position de fermeture,
**caractérisé**
**en ce que** le tiroir (26) de soupape a, du côté du pourtour extérieur un guidage (44) de conduit, qui, comme partie du chemin (20) pour du fluide, produit, dans la position d'ouverture, une communication fluidique entre l'autre (24) des deux points (22, 24) de raccordement et une face périphérique extérieure de l'élément (16) de filtre et, la ferme, dans la position de fermeture.

2. Appareil de filtration suivant la revendication 1, **caractérisé en ce que** le tiroir (26) de soupape a, du côté tourné vers l'élément (16) de filtre, un élément d'accouplement, en particulier sous la forme d'un filetage (82) extérieur, qui coopère d'une manière pouvant être redéfaite avec un autre élément d'accouplement de l'élément de filtre, en particulier sous la forme d'un taraudage (80), en entrant en particulier dans un vissage pouvant être redévissé.

3. Appareil de filtration suivant la revendication 1 ou 2, **caractérisé en ce que** le tiroir (26) de soupape est précontraint dans la direction de sa position de fermeture, au moyen d'un accumulateur d'énergie, en particulier sous la forme d'un ressort (40) de compression.

4. Appareil de filtration suivant l'une des revendications précédentes, **caractérisé en ce que** le tiroir (26) de soupape et l'élément (16) de filtre sont disposés concentriquement par rapport à l'axe (38) longitudinal du boîtier (10) de filtre.

5. Appareil de filtration suivant l'une des revendications précédentes, **caractérisé en ce que** le tiroir (26) de soupape, ensemble avec les points (22, 24) de raccordement et la partie associée du chemin (20) pour du fluide, est reçu dans une tête de filtre comme la une partie (12) du boîtier, et l'élément (16) de filtre dans un pot de filtre, comme l'autre partie (14) du boîtier, qui peut être assemblé, notamment vissé d'une manière pouvant être redésassemblé avec la une partie (12) du boîtier.

6. Appareil de filtration suivant la revendication 5, **caractérisé en ce que**, dans l'état réuni des deux parties (12, 14) du boîtier et, lorsque l'élément (16) de filtre est inséré, le conduit (28) médian du tiroir (26) de soupape débouche dans l'espace (70) intérieur de l'élément (16) de filtre cylindrique creux.

7. Appareil de filtration suivant la revendication 5 ou 6, **caractérisé en ce qu'**il y a, à l'intérieur de l'autre partie (14) du boîtier, un accouplement (88) patinant, qui, lors du vissage de l'élément (16) de filtre sur le tiroir (26) de soupape, dans le cadre de l'opération de vissage de l'autre partie (14) du boîtier sur la une partie (12) du boîtier, met au fin au vissage de l'élément (16) de filtre et continue à autoriser le vissage de l'autre partie (14) du boîtier, et **en ce que**, dans le cas d'un dévissage, l'accouplement (88) patinant agit comme accouplement rigide et rend possible de la même façon l'opération de dévissage de l'autre partie (14) du boîtier, outre l'élément (16) de filtre, dans le sens de rotation contraire.

8. Appareil de filtration suivant l'une des revendications précédentes, **caractérisé en ce que**, dans une partie du chemin (20) pour du fluide, entre les deux points (22, 24) de raccordement, est montée une soupape (34) de dérivation, qui pénètre au moins en partie dans le conduit (30) transversal.
